# EUROPÄISCHE PATENTSCHRIFT

(11) **EP 2 603 677 B1**
(45) Veröffentlichungstag und Bekanntmachung des Hinweises auf die Patenterteilung: **20.05.2015**
(21) Anmeldenummer: 11757788.2
(22) Anmeldetag: 12.08.2011
(51) Int. Cl.: F01N 3/01, F01N 3/021

(54) **HALTERUNG FÜR ZUMINDEST EINE ELEKTRODE IN EINER ABGASLEITUNG**
HOLDER FOR AN ELECTRODE WITHIN AN EXHAUST GAS CONDUIT
DISPOSITIF POUR SOUTENIR UNE ELECTRODE DANS UN CONDUIT DE GAZ D'ECHAPPEMENT

(30) Priorität: 13.08.2010 DE 102010034250
(43) Veröffentlichungstag der Anmeldung: 19.06.2013
(73) Patentinhaber: Emitec Gesellschaft für Emissionstechnologie mbH, 53797 Lohmar (DE)
(72) Erfinder: HODGSON, Jan, 53840 Troisdorf (DE); VORSMANN, Christian, 51105 Köln (DE); BRÜCK, Rolf, 51429 Bergisch Gladbach (DE)
(74) Vertreter: Rössler, Matthias
(86) Internationale Anmeldenummer: PCT/EP2011/063894
(87) Internationale Veröffentlichungsnummer: WO 2012/020111

(56) Entgegenhaltungen:
- EP-A1- 1 277 928
- WO-A1-03/038247
- WO-A1-2006/128711
- WO-A1-2007/082683
- DE-U1- 20 122 703

## Beschreibung

Die vorliegende Erfindung betrifft eine Halterung für zumindest eine Elektrode einer Abgasleitung, insbesondere zur Bereitstellung eines elektrischen Feldes, mit dem Abgas enthaltene Rußpartikel aufgeladen, agglomeriert und/oder abgeschieden werden können.

Es sind bereits eine Vielzahl unterschiedlicher Konzepte zur Beseitigung von Rußpartikeln aus Abgasen mobiler Verbrennungskraftmaschinen diskutiert worden. Neben wechselseitig geschlossenen Wandstromfiltern, offenen Nebenstromfiltern, Schwerkraftabscheidern etc. sind auch bereits Systeme vorgeschlagen worden, bei denen die Partikel im Abgas elektrisch aufgeladen und dann mit Hilfe elektrostatischer Anziehungskräfte abgelagert werden. Diese Systeme sind insbesondere unter der Bezeichnung "elektrostatischer Filter" bzw. "Elektrofilter" bekannt.

So werden für solche Elektrofilter regelmäßig (mehrere) Sprühelektroden und Kollektorelektroden vorgeschlagen, die in der Abgasleitung positioniert sind. Dabei werden bspw. eine zentrale Sprühelektrode, welche etwa mittig durch die Abgasleitung verläuft, und eine umgebende Mantelfläche der Abgasleitung als Kollektorelektrode dazu benutzt, einen Kondensator bilden. Mit dieser Anordnung von Sprühelektrode und der Kollektorelektrode wird quer zur Strömungsrichtung des Abgases ein elektrisches Feld gebildet, wobei die Sprühelektrode bspw. mit einer Hochspannung betrieben werden kann, die im Bereich von ca. 15 kV liegt. Hierdurch können sich insbesondere Korona-Entladungen ausbilden, durch welche die mit dem Abgas durch das elektrische Feld strömenden Partikel unipolar aufgeladen werden. Aufgrund dieser Aufladung wandern die Partikel durch die elektrostatischen Coulomb-Kräfte zur Kollektorelektrode.

Neben Systemen, bei denen die Abgasleitung als Kollektorelektrode ausgeführt ist, sind auch Systeme bekannt, bei denen die Kollektorelektrode bspw. als Drahtgitter ausgebildet ist. Dabei erfolgt die Anlagerung von Partikeln an dem Drahtgitter zu dem Zweck, die Partikel ggf. mit weiteren Partikeln zusammenzuführen, um so eine Agglomeration zu erreichen. Das das Gitter durchströmende Abgas reißt dann die größeren Partikelagglomerate wieder mit und führt sie klassischen Filtersystemen zu.

Auch wenn sich die oben beschriebenen Systeme bislang zumindest in Versuchen geeignet für die Behandlung von Rußpartikeln herausgestellt haben, stellt doch die Umsetzung dieses Konzeptes für den Serienbetrieb bei Kraftfahrzeugen noch immer eine große technische Herausforderung dar. Dies gilt insbesondere hinsichtlich der stark schwankenden, zeitlich sehr hohen Rußbelastung im Abgas. Ebenso stellt die gewünschte Nachrüstbarkeit eines solchen Systems für derzeitig existierende Abgasanlagen noch ein großes Problem dar. Insbesondere treten im Abgassystem von Kraftfahrzeugen regelmäßig stoßartig ansteigende Abgasmengen auf, die bspw. bei stationären Verbrennungskraftmaschinen, die zur Stromerzeugung eingesetzt werden, nicht auftreten. Weiterhin sind Abgassysteme, bspw. aufgrund von Bodenunebenheiten, mechanischen Belastungen ausgesetzt. Zudem ist zu berücksichtigen, dass mit der gesteigerten Leistung bzw. Effektivität solcher Abgasanlagen hinsichtlich der Beseitigung von Rußpartikeln auch eine (periodische und/oder kontinuierliche) Regeneration der Filtersysteme erforderlich ist, bei der der Ruß in gasförmige Bestandteile überführt wird.

Bei der Regenerationen von Filtersystemen ist neben der intermittierenden Regeneration durch kurzzeitiges Aufheizen, das heißt Verbrennen des Rußes (katalytisch motivierte, oxidative Umsetzung), auch bekannt, Ruß mittels Stickstoffdioxid (NO₂) umzuwandeln. Der Vorteil der kontinuierlichen Regeneration mit Stickstoffdioxid ist, dass die Umwandlung von Ruß hier bereits bei deutlich tieferen Temperaturen -(insbesondere kleiner 250 °C) stattfinden kann. Aus diesem Grund ist die kontinuierliche Regeneration in vielen Anwendungsfällen bevorzugt. Das führt jedoch zu dem Problem, dass sichergestellt sein muss, dass das Stickstoffdioxid im Abgas mit den angelagerten Rußpartikeln in ausreichendem Umfang in Kontakt kommt.

Auch in diesem Zusammenhang ergeben sich technische Schwierigkeiten bei der Realisierung eines dauerhaften Betriebes solcher Abgasanlagen bei Kraftfahrzeugen, wobei die unterschiedlichen Belastungen der Verbrennungskraftmaschinen zu unterschiedlichen Abgasströmen, Abgaszusammensetzungen und/oder Temperaturen führen.

Darüber hinaus ist zu berücksichtigen, dass bei der Bereitstellung solcher Komponenten für ein solches Ruß-Abscheide-System möglichst einfache Komponenten eingesetzt werden sollen, insbesondere auch solche, die sich im Rahmen einer Serienfertigung kostengünstig herstellen lassen. Außerdem ist gerade beim Design der Elektroden zu berücksichtigen, dass diese ggf. ausgerichtet in der Abgasleitung positioniert sein müssen, insbesondere so, dass ein unerwünscht hohler Staudruck bzw. eine unerwünschte Verwirbelung des Abgases im Bereich der Elektrode nicht eintritt.

Aus DE 201 22 703 U1 ist eine Partikelfalle in Form eines lagenweise aufgebauten Wabenkörpers bekannt, vor dem in der Abgasleitung ein Plasmareaktor angeordnet ist. Spitzen zur Erzeugung des Plasmas sind als Elektroden elektrisch leitend mit der Partikelfalle verbunden.

Aus JP 2007-009839 A ist ein Plasmareaktor bekannt, der in einer Abgasleitung angeordnet ist. Ein elektrischer Anschluss erstreckt sich durch die Wandung der Abgasleitung und kontaktiert eine elektrische Verteilerplatte, an die eine Mehrzahl von Elektroden angebunden ist. Die Elektroden sind zueinander elektrisch parallel geschaltet.

Hiervon ausgehend ist es Aufgabe der vorliegenden Erfindung, die mit Bezug auf den Stand der Technik geschilderten Probleme zumindest teilweise zu lindern. Insbesondere soll eine Halterung für zumindest eine Elektrode angegeben werden, die eine exakte Ausrichtung der Elektrode im Abgasstrom ermöglicht. Außerdem soll die Halterung mit technisch einfachen Mittel bereitgestellt werden und dauerhaft den wechselnden Bedingungen im Abgassystem eines Kraftfahrzeuges standhalten.

Diese Aufgaben werden gelöst mit einer Halterung mit den Merkmalen des Patentanspruches 1. Weitere vorteilhafte Ausgestaltungen der Erfindung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, veranschaulicht die Erfindung und gibt zusätzliche Ausführungsbeispiele an.

Die erfindungsgemäße Halterung für mehrere Elektroden, nämlich zur Erzeugung einer Korona-Entladung geeignete Sprühelektroden, in einer Abgasleitung, umfaßt einen für ein Abgas durchströmbaren Körper, der durchströmbare Kanäle aufweist und die mehreren Elektroden hält, und zumindest einen elektrischen Kontakt für die Elektroden. Dabei ist der zumindest eine elektrische Kontakt in den Körper integriert. Weiter ist vorgesehen, dass der durchströmbare Körper und der zumindest eine elektrische Kontakt jeweils elektrisch segmentiert und voneinander elektrisch isoliert sind, so dass eine Stromzufuhr hin zu den mehreren Elektroden getrennt und unabhängig voneinander realisiert werden kann..

Wenn nachfolgend eine Elektrode erwähnt ist, ist insbesondere eine zur Erzeugung einer Korona-Entladung geeignete Sprühelektrode gemeint.

Es ist bevorzugt, dass die Halterung zur Fixierung bzw. Befestigung einer Mehrzahl (oder sogar Vielzahl) von Elektroden in der Abgasleitung dient. Hierfür ist ein durchströmbarer Körper vorgesehen, an dem die zumindest eine Elektrode angeordnet ist. Der durchströmbare Körper ist dabei so ausgeführt, dass das Abgas den Körper ohne großen Druckverlust durchströmen kann. Hierfür sind geeignete Öffnungen, Kanäle oder dergleichen vorgesehen, durch die das Abgas hindurchgeführt werden kann. Insbesondere sind Kanäle mit einer Kanaldichte von mindestens 150 cpsi (channels per square inch), oder sogar 300 cpsi bevorzugt. Unter einem Kanal ist in diesem Zusammenhang eine durchströmbare Öffnung zu verstehen, deren Länge in Strömungsrichtung größer ist als dessen Querschnitt.

Die Elektroden erstrecken sich dabei bevorzugt in Strömungsrichtung des Abgases durch den durchströmbaren Körper und/oder besonders bevorzugt über den durchströmbaren Körper einseitig überstehend hinaus. Die Elektrode ist insbesondere als Stabelektrode ausgebildet, deren Ende eine Spitze mit einem Krümmungsradius aufweist, die zur Erzeugung einer Korona-Entladung bei Anlegen einer entsprechenden Spannung geeignet ist. Dabei ist weiter bevorzugt, dass der durchströmbare Körper im Wesentlichen laminar durchströmt werden kann, so dass insbesondere ein gezieltes Strömen des Abgases entlang an der Elektrode erreicht wird. Hierzu können die Elektroden ausgehend von einer Stirnfläche des durchströmbaren Körpers, die bevorzugt quer zur Strömungsrichtung des Abgases angeordnet ist, senkrecht hervorstehen. Neben der Strömungsbeeinflussung bzw. der Strömungspassage hat die Halterung weiterhin die Funktion, die zumindest eine Elektrode elektrisch zu kontaktieren. Hierfür sind elektrische Leiter in bzw. an dem durchströmbaren Körper ausgebildet, so dass ein elektrischer Kontakt ausgehend von der Abgasleitung hin zu der zumindest einen Elektrode ausgeführt ist. Der elektrische Kontakt kann mit aufgedruckten Leiterbahnen, elektrisch leitfähigen Materialien, Kabeln, etc. ausgebildet sein. In diesem Zusammenhang ist bevorzugt, dass der elektrische Kontakt zumindest teilweise in die Halterung integriert bzw. eingearbeitet ist. Hierfür können auch elektrische Isolierungen vorgesehen sein, um eine gezielte Zuführung von elektrischem Strom hin zur Elektrode zu gewährleisten. Der elektrische Kontakt ist insbesondere so ausgebildet, dass eine hohe Spannung (z. B. oberhalb von 1.000 Volt) bei gleichzeitig niedrigem Strom (z. B. unterhalb von 0,1 Ampere) realisierbar ist.

Insbesondere ist der elektrische Kontakt durch das Material des Körpers gebildet. Das bedeutet, dass ein elektrisches Potential, das an dem Körper anliegt, auch an der Sprühelektrode anliegt. Dies kann dadurch erreicht werden, dass der Körper aus einem elektrisch leitfähigem Material, insbesondere Metall, gefertigt ist und der Körper als Ganzes auf einem elektrischen Potential liegt. Weiterhin ist möglich, dass der elektrisch leitfähige Körper durch Isolatoren elektrisch segmentiert ist und abgegrenzte Bereiche des Körpers auf einem elektrischen Potential liegen. Weiter ist bevorzugt, dass eine Kanalwand eines Kanals als elektrischer Kontakt dient und somit elektrisch von dem Rest des Körpers isoliert ist, wobei eine elektrisch leitfähige Verbindung zu einem Anschluss außerhalb der Abgasleitung besteht.

Zudem kann vorgesehen sein, dass der elektrische Kontakt ein separates Bauteil ist, das bei der Herstellung des Körpers in diesen integriert wird. So kann beispielsweise wenigstens ein Kabel in den Körper integriert sein.

Gemäß einer bevorzugten Weiterbildung der Halterung weist der durchströmbare Körper wenigstens ein Gehäuse und wenigstens eine metallische Wabenstruktur auf, wobei der zumindest eine elektrische Kontakt durch das wenigstens eine Gehäuse hindurch ausgebildet ist. Das Gehäuse ist bspw. nach Art eines zylindrischen Mantelrohres ausgebildet. Im Inneren dieses Gehäuses kann eine metallische Wabenstruktur vorgesehen sein, die bspw. durch eine Mehrzahl zumindest teilweise strukturierter metallischer Lagen ausgeführt ist. Dabei bildet die Wabenstruktur im Wesentlichen parallel zueinander verlaufende Kanäle aus, die für das Abgas mit geringem Druckverlust durchströmbar sind. Für den Fall, dass mehrere Elektroden vorgesehen sind, die ggf. getrennt mit einem elektrischen Kontakt ausgeführt sind, können auch mehrere Gehäuseteile für einen jeweils unterschiedlichen elektrischen Kontakt bereitgestellt werden. Diese Gehäuseteile sind dann ggf. gegeneinander elektrisch isoliert. Die Herstellung solcher durchströmbarer Körper hat sich gerade im Automobilbereich bereits durchgesetzt, so dass sich hier mit fertigungstechnisch einfachen Mitteln solche Wabenstrukturen zur Fixierung der zumindest einen Elektrode herstellen lassen. Außerdem kann so erreicht werden, dass eine im Wesentlichen laminare Strömung eingestellt wird. Der elektrische Kontakt, der einerseits mit einer Stromversorgung bzw. Spannungsversorgung kontaktiert ist, wird dabei (isoliert) durch die Abgasleitung und das wenigstens eine Gehäuse hindurchgeführt.

Darüber hinaus wird vorgeschlagen, dass der durchströmbare Körper mehrere Elektroden und zumindest einen Verteiler aufweist, wobei der zumindest eine Verteiler eine Mehrzahl von Elektroden elektrisch kontaktiert. In diesem Fall ist realisiert, dass der elektrische Kontakt zu einem elektrisch leitfähigen Verteiler verbunden ist, der integraler Bestandteil des durchströmbaren Körpers ist. Der Verteiler kann dabei als separates Bauteil ausgeführt sein, bspw. nach Art eines Kabelbaumes, einer aufgedruckten Leiterbahnstruktur oder dergleichen. Der Verteiler dient dazu, den vom elektrischen Kontakt bereitgestellten Strom (gleichmäßig) hin zu der Mehrzahl der Elektroden zu verteilen. Somit kann durch eine angepasste Ausführung des Verteilers ein vorgegebenes elektrisches Feld mittels der Mehrzahl von Elektroden problemlos eingestellt werden. Insbesondere wird somit die Stromzufuhr hin zum durchströmbaren Körper bzw. den mehreren Elektroden vereinfacht.

Der elektrische Kontakt bzw. der Verteiler kann dabei im durchströmbaren Körper bspw. durch Löten bzw. Schweißen fixiert sein.

Gemäß einer Weiterbildung der Halterung ist auch vorgesehen, dass der durchströmbare Körper zumindest einen ersten Kanal mit einem Kanalquerschnitt und zumindest einen zweiten Kanal mit einem Elektrodenquerschnitt aufweist. Bei dieser Ausgestaltung ist bevorzugt, dass der durchströmbare Körper nach Art einer Wabenstruktur ausgebildet ist, wobei Kanäle mit verschiedenem Kanalquerschnitt bereitgestellt sind. Während erste Kanäle nur zur Durchleitung des Abgases vorgesehen sind, sind zweite Kanäle dazu vorgesehen, die zumindest eine Elektrode aufzunehmen. In diesem Fall haben die zweiten Kanäle einen Kanalquerschnitt, der im Wesentlichen dem Elektrodenquerschnitt entspricht, so dass die Elektrode zumindest teilweise im Inneren der zweiten Kanäle angeordnet werden kann und dessen Kanalquerschnitt im Wesentlichen verschließt. Auf diese Weise ist es möglich, über den Umfang der Elektrode einen elektrischen Kontakt sowie eine dauerhafte Verbindung auszuführen, bspw. mittels Löten und/oder Schweißen.

Darüber hinaus ist der durchströmbare Körper elektrisch segmentiert, wobei die Segmente zumindest teilweise voreinander isoliert sind. Insbesondere für den Fall, dass ein elektrisches Feld mit variierenden Eigenschaften gewünscht ist, in dem bspw. Teilbereiche in der Abgasleitung (zeitweise) mit einem veränderlichen elektrischen Feld ausgeführt sein sollen, ist diese Bauart bevorzugt. Hier ist also realisiert, dass eine Stromzufuhr hin zu den mehreren Elektroden getrennt und unabhängig voneinander realisiert werden kann. So kann die Anzahl der das elektrische Feld bildenden Elektroden ggf. bedarfsgereicht variiert werden. Auch ist ggf. eine Stromzufuhr mit unterschiedlichen Parametern gleichzeitig hin zu verschiedenen Elektroden ermöglicht. Um hier eine Beeinflussung der einzelnen Elektroden zu vermeiden, sind die Stromleitungsstrukturen bzw. der elektrische Kontakt bzw. der Verteiler segmentiert und voneinander elektrisch isoliert ausgeführt. Die einzelnen Segmente können mit einer separaten Stromversorgung und/oder Steuerung ausgeführt sein.

Weiterhin wird eine Vorrichtung zur Fixierung wenigstens einer elektrischen Elektrode in einer Abgasleitung vorgeschlagen, die zumindest eine Halterung der erfindungsgemäßen Art aufweist, bei der ein Partikelabscheider in Strömungsrichtung des Abgases nachfolgend angeordnet ist. Somit wird insbesondere in Strömungsrichtung zwischen der wenigstens einen elektrischen Elektrode und dem nachfolgenden Partikelabscheider ein elektrisches Feld aufgebaut. Folglich ist es möglich, mittels der elektrischen Elektrode die im Abgas enthaltenen Rußpartikel mit einer elektrischen Ladung zu versehen, wodurch ihre Abscheideneigung hin zum Partikelabscheider vergrößert ist. Zudem ist möglich, dass sich die Partikel infolge des elektrischen Feldes agglomerieren und somit auch kleinste Rußpartikel im nachfolgenden Partikelabscheider eingelagert und schließlich umgesetzt werden.

Bei der Partikelfalle handelt es sich insbesondere um einen so genannten offenen Nebenstromfilter, bei dem keine vollständig verschlossenen Strömungskanäle vorliegen. Die Partikelfalle ist vielmehr mit einem metallischen Vlies und metallischen Welllagen geformt, in denen Öffnungen, Leitstrukturen etc. vorgesehen sind. Die Leitstrukturen bilden dabei Strömungsengpässe in den Strömungspassagen, so dass die Verweilzeit bzw. Auftreffwahrscheinlichkeit für Rußpartikel im Inneren der Partikelfalle vergrößert wird. In diesem Zusammenhang wird auf die bekannten Patentveröffentlichungen der Anmelderin verwiesen, die zur näheren Charakterisierung der Partikelfalle und/oder deren Regeneration herangezogen werden können; insbesondere wird hierzu vollumfänglich auf die Beschreibung aus den folgenden Dokumenten Bezug genommen: WO-A-01/80978; WO-A-02/00326; WO-A-2005/099867; WO-A-2005/066469; WO-A-2006/136431; WO-A-2007/140932.

Die Regeneration einer solchen Partikelfalle erfolgt dabei bevorzugt kontinuierlich auf Basis der CRT-Methode. Hierzu kann der Vorrichtung z. B. ein Oxidationskatalysator vorgeschaltet sein, in dem (auch) Stickstoffmonoxid zu Stickstoffdioxid aufoxidiert wird, der dann mit dem Ruß in der Partikelfalle reagiert. Zudem ist auch möglich, dass eine solche oxidativ wirkende Beschichtung in der Partikelfalle selbst realisiert ist, entweder in einer Zone davon oder aber in allen Bereichen der Partikelfalle.

Zudem kann es auch sinnvoll sein, mehrere Halterungen vorzusehen. Diese sind bevorzugt in Strömungsrichtung des Abgases hintereinander angeordnet. Die mehreren Halterungen können sich dabei hinsichtlich ihrer Wirkung auf das Strömungsverhalten des Abgases und/oder der Ausbildung des elektrischen Feldes gegenseitig beeinflussen. Dabei ist ggf. auch möglich, dass die Elektroden einer ersten Halterung die nachfolgende zweite Halterung zumindest teilweise durchdringen.

In vielen Anwendungsfällen ist vorgesehen, dass der Körper einen Leitungsquerschnitt der Abgasleitung komplett überspannt. Das heißt mit anderen Worten insbesondere, dass das Abgas nicht an dem Körper außen vorbeiströmen kann, sondern den Innenbereich des Körpers durchströmt.

Gemäß einer Weiterbildung kann jedoch auch vorgesehen sein, dass die zumindest eine Halterung den Leitungsquerschnitt der Abgasleitung nur teilweise überspannt. So kann die Halterung bspw. mit einem Ringspalt hin zur Abgasleitung ausgeführt sein. Gerade bei der Ausbildung mehrerer Halterungen hintereinander ist es möglich, in der Summe wiederum den gesamten Leitungsquerschnitt der Abgasleitung zu überspannen. Dies kann bspw. so aussehen, dass zunächst nur ein zentraler Kreisabschnitt des Leitungsabschnittes von der Halterung ausgefüllt ist, während nachfolgende Bereiche mit konzentrischen, ringförmigen Halterungen ausgeführt sind.

Schließlich wird auch noch vorgeschlagen, dass die zumindest eine Halterung schwingungssensibel für Abgaspulsationen ausgeführt ist. Hiermit ist insbesondere gemeint, dass die Halterung so in der Abgasleitung gelagert ist, das diese aufgrund der Abgaspulsation, die durch die Verbrennungsvorgänge im Motor des Kraftfahrzeuges auftreten, zur Schwingung angeregt wird. Dabei ist es möglich, die Halterung so auszuführen, dass ein axiales und/oder radiales Schwingen der Halterung und/oder der Sprühelektrode ermöglicht ist. Insofern sind hier entsprechend flexible bzw. "weiche" Lagerungen vorzusehen. Auf diese Weise werden Ablagerungen bspw. von Ruß an der Halterung und/oder den Sprühelektroden im Betrieb immer wieder gelöst, so dass hier insbesondere die Gefahr von elektrischen Kurzschlüssen im Bereich der Halterung signifikant reduziert werden kann.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung aufzeigen, diese jedoch nicht darauf beschränkt ist. Es zeigen schematisch:
- Fig. 1:: ein erstes Ausführungsbeispiel einer Vorrichtung mit einer Elektrodenhalterung und einem nachfolgenden Partikelabscheider, und
- Fig. 2:: ein Ausführungsbeispiel einer Halterung in einem Querschnitt.

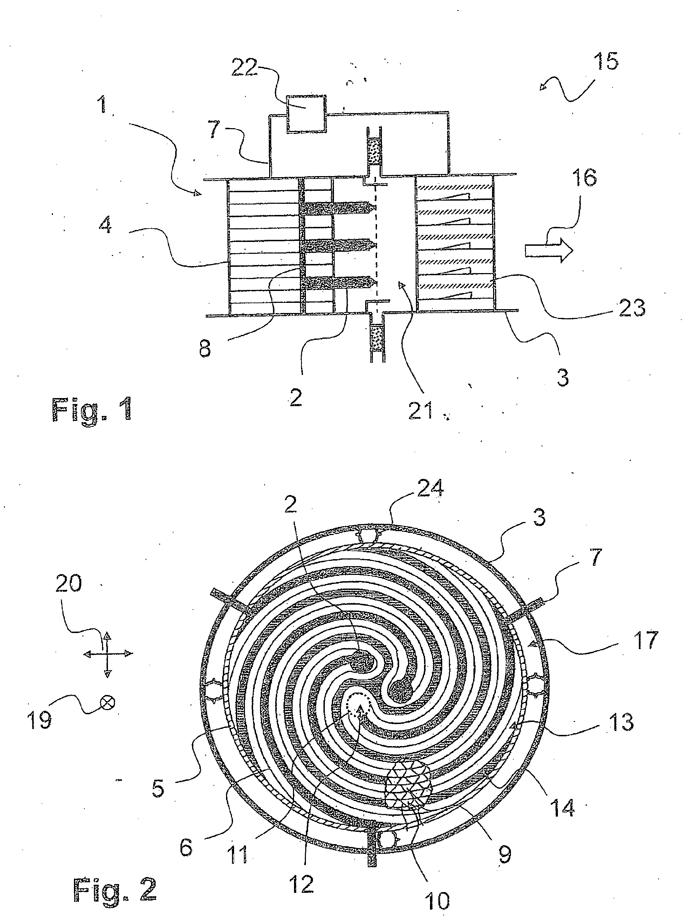

Fig. 1 zeigt in einem Längsschnitt eine Vorrichtung 15 zur Fixierung einer Mehrzahl elektrischer Elektroden 2 in einer Abgasleitung 3. In Strömungsrichtung 16 des Abgases ist dabei zunächst eine Halterung mit einem für ein Abgas durchströmbaren Körper. 4 vorgesehen. Der durchströmbare Körper 4 weist dabei eine Vielzahl parallel zueinander verlaufender Kanäle auf. Auf der rückwärtigen Seite dieses durchströmbaren Körpers 4 sind mehrere Elektroden 2 über den Querschnitt verteilt angeordnet. Die Vorrichtung 15 weist zudem eine Stromversorgung 22 auf, die über den elektrischen Kontakt 7 und den Verteiler 8 einen Stromfluss hin zu den Elektroden 2 realisiert. Ausgehend von diesen Elektroden 2 in Strömungsrichtung 16 nachfolgend dem durchströmbaren Körper 4 ist nun das elektrische Feld 21 ausgebildet. Dabei ist ein Potential zwischen dem durchströmbaren Körper 4 und dem nach geordneten Partikelabscheider 23 ausgebildet, der ebenfalls in der Abgasleitung 3 positioniert ist. Der Partikelabscheider 23 ist insbesondere nach Art eines metallischen, offenen Nebenstromfilters ausgebildet.

Fig. 2 zeigt ebenfalls schematisch einen Querschnitt einer geeigneten Elektrodenhalterung. Dargestellt ist die im Wesentlichen rohrförmige Abgasleitung 3, die einen im Wesentlichen runden Leitungsquerschnitt 17 ausbildet. Beabstandet zu der Abgasleitung 3 ist dabei der durchströmbare Körper mit einem Gehäuse 5 und einer metallischen Struktur 6 ausgebildet. Dabei bildet der durchströmbare Körper hier drei Segmente, die ebenfalls einen elektrischen Kontakt 7 aufweisen, der eine Stromzufuhr hin zu den drei zentral angedeuteten Elektroden 2 realisieren. Die einzelnen Segmente sind mit glatten und strukturierten Metallfolien gebildet, so dass für das Abgas durchströmbare Kanäle gebildet sind. Die Segmente 13 sind zudem mittels einer elektrischen Isolierung voneinander beabstandet. Es sei darauf hingewiesen, dass regelmäßig der Anteil der durchströmbaren Kanäle gegenüber den elektrisch isolierten Teilbereichen des durchströmbaren Körpers deutlich größer sind, als das hier veranschaulicht ist.

Hierbei ist folglich eine Vielzahl erster Kanäle 9 realisiert, die einen vorgegebenen Kanalquerschnitt 10 aufweisen. Zudem sind hier (drei) zweite Kanäle vorgesehen, die zur Aufnahme der drei Elektroden 2 dienen, wobei diese zweiten Kanäle 11 im Wesentlichen einen Elektrodenquerschnitt 12 bilden.

Darüber hinaus ist in Fig. 2 veranschaulicht, dass das Gehäuse 5 mit der Wabenstruktur 6 mit Lagerungen 24 ausgeführt sind, so dass die Halterung schwingungssensibel für die Abgaspulsation ist. Somit ist insbesondere eine Relativbewegung der Halterung gegenüber der Abgasleitung 3 in Richtung eines Radius 20 bzw. einer Achse 19 ermöglicht.

Die vorliegende Erfindung löst somit die mit Bezug auf den Stand der Technik geschilderten Probleme wenigstens teilweise. Insbesondere wurde eine Halterung für zumindest eine Elektrode (Sprühelektrode zur Erzeugung einer Korona-Entladung) angegeben, die eine exakte Ausrichtung der Elektrode im Abgasstrom ermöglicht. Außerdem kann diese Halterung mit technisch einfachen Mittel bereitgestellt werden und dauerhaft den wechselnden Bedingungen im Abgassystem eines Kraftfahrzeuges standhalten.

### Bezugszeichenliste

- 1: Halterung
- 2: Elektrode
- 3: Abgasleitung
- 4: durchströmbarer Körper
- 5: Gehäuse
- 6: Wabenstruktur
- 7: elektrischer Kontakt
- 8: Verteiler
- 9: erster Kanal
- 10: Kanalquerschnitt
- 11: zweiter Kanal
- 12: Elektrodenquerschnitt
- 13: Segment
- 14: Isolierung
- 15: Vorrichtung
- 16: Strömungsrichtung
- 17: Leitungsquerschnitt
- 18: Lagerung
- 19: Achse
- 20: Radius
- 21: elektrisches Feld
- 22: Stromversorgung
- 23: Partikelabscheider
- 24: Lagerung

## Patentansprüche

1. Halterung (1) für mehrere Elektroden (2), nämlich -zur Erzeugung einer Korona-Entladung geeignete Sprühelektroden, in einer Abgasleitung (3), wobei die Halterung (1) einen für ein Abgas durchströmbaren Körper (4), der durchströmbare Kanäle aufweist und die mehreren Elektroden (2) hält, und zumindest einen elektrischen Kontakt (7) für die Elektroden (2) umfasst, wobei der zumindest eine elektrische Kontakt (7) in den Körper (4) integriert ist, **dadurch gekennzeichnet, dass** der durchströmbare Körper (4) und der zumindest eine elektrische Kontakt (7) jeweils elektrisch segmentiert und voneinander elektrisch isoliert sind, so dass eine Stromzufuhr hin zu den mehreren Elektroden (2) getrennt und unabhängig voneinander realisiert werden kann.

2. Halterung (1) nach Patentanspruch 1, bei der der durchströmbare Körper (4) wenigstens ein Gehäuse (5) und wenigstens eine metallische Wabenstruktur (6) aufweist und der zumindest eine elektrische Kontakt (7) durch das wenigstens eine Gehäuse (5) hindurch ausgebildet ist.

3. Halterung (1) nach Patentanspruch 1 oder 2, bei der der durchströmbare Körper (4) zumindest einen Verteiler (8) aufweist, wobei der zumindest eine Verteiler (8) eine Mehrzahl von Elektroden (2) elektrisch kontaktiert.

4. Halterung (1) nach einem der vorhergehenden Patentansprüche, bei der der durchströmbare Körper (4) zumindest einen ersten Kanal (9) mit einem Kanalquerschnitt (10) und zumindest einen zweiten Kanal (11) mit einem Elektrodenquerschnitt (12) aufweist.

5. Vorrichtung (15) zur Fixierung wenigstens einer elektrischen Elektrode (2) in einer Abgasleitung (3), aufweisend zumindest eine Halterung (1) nach einem der vorhergehenden Patentansprüche, bei der ein Partikelabscheider (23) in Strömungsrichtung (16) des Abgases nachfolgend angeordnet ist.

6. Vorrichtung (15) nach Patentanspruch 5, bei der mehrere Halterungen (1) vorgesehen sind.

7. Vorrichtung (15) nach Patentanspruch 5 oder 6, bei der die zumindest eine Halterungen (1) einen Leitungsquerschnitt (17) der Abgasleitung (3) nur teilweise überspannt.

8. Vorrichtung (15) nach einem der Patentansprüche 5 bis 7, bei der die zumindest eine Halterung (1) schwingungssensibel für Abgaspulsationen ausgeführt ist.

## Claims

1. Holder (1) for a plurality of electrodes (2), the electrodes (2) being discharge electrodes suitable for producing a corona discharge, in an exhaust-gas line (3), wherein the holder (1) comprises a body (4) through which an exhaust gas can flow and which has channels through which flow can occur and which holds the plurality of electrodes (2), and at least one electric contact (7) for the electrodes (2), wherein the at least one electric contact (7) is integrated into the body (4), **characterized in that** the body (4) through which flow can occur and the at least one electrical contact (7) are electrically segmented and electrically isolated from each other, so that a supply of electrical current to the plurality of electrodes (2) can be implemented separately and independently of each other.

2. Holder (1) as claimed in claim 1, in which the body (4) through which flow can occur has at least one housing (5) and at least one metallic honeycomb structure (6), and the at least one electric contact (7) is formed through the at least one housing (5).

3. Holder (1) as claimed in claim 1 or 2, in which the body (4) through which flow can occur has at least one distributor (8), wherein the at least one distributor (8) makes electric contact with a plurality of electrodes (2).

4. Holder (1) as claimed in one of the preceding claims, in which the body (4) through which flow can occur has at least one first channel (9) having a channel cross section (10) and at least one second channel (11) having an electrode cross section (12).

5. Apparatus (15) for fixing at least one electric electrode (2) in an exhaust-gas line (3), having at least one holder (1) as claimed in one of the preceding claims, in which a particle separator (23) is arranged downstream in the flow direction (16) of the exhaust gas.

6. Apparatus (15) as claimed in claim 5, in which a plurality of holders (1) is provided.

7. Apparatus (15) as claimed in claim 5 or 6, in which the at least one holder (1) only partially spans a line cross section (17) of the exhaust-gas line (3).

8. Apparatus (15) as claimed in one of claims 5 to 7, in which the at least one holder (1) is embodied so as to be vibrationally sensitive to exhaust-gas pulsations.

## Revendications

1. Support de fixation (1) pour plusieurs électrodes (2), à savoir des électrodes d'émission appropriées pour générer une décharge Corona, dans une conduite de gaz d'échappement (3), le support de fixation (1) présentant un corps (4) pouvant être parcouru par un écoulement pour un gaz d'échappement, qui présente des canaux pouvant être parcourus par un écoulement et qui contient la pluralité d'électrodes (2), et au moins un contact électrique (7) pour les électrodes (2), l'au moins un contact électrique (7) étant intégré dans le corps (4), **caractérisé en ce que** le corps pouvant être parcouru par un écoulement (4) et l'au moins un contact électrique (7) sont chacun segmentés électriquement et isolés électriquement l'un de l'autre, de telle sorte qu'une alimentation en courant à la pluralité d'électrodes (2) puisse être réalisée de manière séparée et indépendamment les unes des autres.

2. Support de fixation (1) selon la revendication 1, dans lequel le corps pouvant être parcouru par un écoulement (4) présente au moins un boîtier (5) et au moins une structure métallique en nid d'abeilles (6) et l'au moins un contact électrique (7) est réalisé à travers l'au moins un boîtier (5).

3. Support de fixation (1) selon la revendication 1 ou 2, dans lequel le corps pouvant être parcouru par un écoulement (4) présente au moins un distributeur (8), l'au moins un distributeur (8) venant contact électrique avec une pluralité d'électrodes (2).

4. Support de fixation (1) selon l'une quelconque des revendications précédentes, dans lequel le corps pouvant être parcouru par un écoulement (4) présente au moins un premier canal (9) ayant une section transversale de canal (10) et au moins un deuxième canal (11) ayant une section transversale d'électrodes (12).

5. Dispositif (15) pour fixer au moins une électrode électrique (2) dans une conduite de gaz d'échappement (3), présentant au moins un support de fixation (1) selon l'une quelconque des revendications précédentes, dans lequel un séparateur de particules (23) est disposé à la suite dans la direction d'écoulement (16) du gaz d'échappement.

6. Dispositif (15) selon la revendication 5, dans lequel plusieurs supports de fixation (1) sont prévus.

7. Dispositif (15) selon la revendication 5 ou 6, dans lequel l'au moins un support de fixation (1) surmonte seulement en partie une section transversale de conduite (17) de la conduite de gaz d'échappement (3).

8. Dispositif (15) selon l'une quelconque des revendications 5 à 7, dans lequel l'au moins un support de fixation (1) est réalisé de manière sensible aux oscillations pour les pulsations de gaz d'échappement.
